# EUROPEAN PATENT SPECIFICATION

(11) **EP 3 341 635 B1**
(45) Date of publication and mention of the grant of the patent: **27.05.2020**
(21) Application number: 16774998.5
(22) Date of filing: 15.07.2016
(51) Int. Cl.: F16K 5/12, F16K 27/06

(54) **A VALVE, A VALVE SET AND A METHOD FOR MODIFYING A VALVE**
VENTIL, VENTILSITZ UND VERFAHREN ZUR VERÄNDERUNG EINES VENTILS
VANNE, ENSEMBLE VANNE ET PROCÉDÉ POUR MODIFIER UNE VANNE

(30) Priority: 28.08.2015 SE 1551121
(43) Date of publication of application: 04.07.2018
(73) Proprietor: AB Somas Ventiler, 661 23 Säffle (SE)
(72) Inventor: JANSSON, Magnus, 661 43 Säffle (SE)
(74) Representative: Hynell Intellectual Property AB
(86) International application number: PCT/SE2016/050722
(87) International publication number: WO 2017/039516

(56) References cited:
- EP-A1- 1 736 694
- EP-A2- 2 299 152
- CA-C- 2 167 430
- DE-A1- 4 143 309
- DE-B3-102006 027 057
- FR-A1- 2 676 175
- JP-A- H11 230 371
- US-A- 6 039 304

## Description

### FIELD OF INVENTION

The present invention in a first aspect relates to a valve for fluids (and powders, pellets) with a valve housing defining a valve chamber connecting an inlet opening to an outlet opening and with a valve obturator located in the valve chamber, which valve includes a valve seat cooperating with the valve obturator and further includes a first throttling plate, which throttling plate has an opening there through, which opening determines the flow capacity and the flow characteristic of the valve.

In a second aspect, the invention relates to a valve set.

In a third aspect, the invention relates to a method for modifying a valve of the kind described above.

### BACKGROUND OF INVENTION

The capacity and the characteristic of a valve are the two main issues when designing a valve for fluid (in the following mostly referred to liquid, which is the most common use, without any limiting intention). The capacity is the flow rate at full open position, and the characteristic is the flow rate as a function of the opening degree, e.g. the opening angle. Different applications of a valve require different types of characteristic, for example linear characteristic, rapid opening characteristic and equal percentage characteristic, i.e. logarithmic characteristic. As well known to the skilled person there exist two kind of characteristics, i.e. inherent characteristic and installed characteristic. Mostly it is the installed characteristic that is of greatest interest and mostly a linear installed characteristic is desired.

If a valve is applied in a certain process and it is experienced that the installed characteristic of the valve is not optimized for that process there is a need to have another kind of characteristic. In other situations it might be found that the capacity is not large enough, e.g. if the demand increases in comparison with what the valve initially was dimensioned for.

In order to avoid the cost for buying a new valve to replace the insufficient valve it is an advantage if the valve can be modified in order to better adapt to the required operating conditions. Therefor it exist valves that are constructed such that the capacity or the characteristic or both may be changed. Representative examples of such valves are disclosed e.g. in US 5480123, US 5937890, US 6039304, US 8413684, EP 1736694 and DE102006027057.

Common to the known valves that are constructed such that the capacity and/or the characteristic thereof can be changed is that they to various degrees require relatively complicated measures for changing, such that the cost reduction in relation to buy a new valve is limited. In addition, many such valves suffer from the drawback that they are sensitive to particles following with the liquid flow such that the functionality of the valve becomes reduced or even destroyed should there be particles present in the liquid flow.

The disclosure US 6039304 describes a valve of the same kind as that of the present invention relates. In that disclosure the valve is provided with a disk with an opening for liquid flow. The sole function of the disk is to determine the capacity/characteristic of the valve. If a change is required the disc is dismounted and replaced with another disc. The disc is mounted adjacent the valve seat. Specific details are arranged for mounting the seat in the valve and maintain it in its position. The side of the disc facing the spherical valve obturator has a corresponding spherical shape and is positioned such that there is as small clearance to the valve as possible entailing the risk that particles may be jammed between the disk and the valve head.

### SUMMARY OF INVENTION

The object of the present invention is to overcome the drawbacks entailing known valves of the kind in question, in particular to simplify change of the capacity and/or the characteristic of the valve and to avoid that particles may get stuck in such a valve.

This object is according to the first aspect of the invention achieved in that a valve of the kind specified in the preamble of claim 1, includes the specific features specified in the characterizing portion of the claim.

The throttling plate thus has the dual purpose of being both a throttle plate and a cover plate as one single component. Mounting and maintaining the seat by means of a cover plate is a simple and advantageous way of accomplishing this function in comparison to providing flanges, grooves or the like in the inside of the housing for that. When such a cover plate is used also as a throttle plate, the possibility to change capacity and/or the characteristic of the valve is achieved without providing a specific component only for that purpose. This leads to a relatively cheap and simple arrangement for modifying the capacity/characteristic by exchanging the cover plate/throttling plate.

The position of the throttling plate at a distance from the valve obturator means that there will be a space between these. Due to this space, eventual particles, fibres or the like will easily pass from the throttling plate and be flushed into the valve chamber and there will be no or very little risk that they get stuck in this region of the valve. By "a distance" is to be understood any distance that is larger than the normal necessary clearance required between two surfaces to enable them to be movable in relation to each other.

According to the invention, the valve is of the ball-valve type, wherein the valve obturator includes a spherically shaped portion cooperating with the valve seat and is rotatable around an axis through the centre defined by the spherically shaped portion. The term "ball-valve type" thus is to be understood as including ball valves as well as ball segment valves and ball sector valves. However the invention is especially suitable for use in connection with ball segment valves and ball sector valves.

The advantages of the invention are particularly important for this type of valve. The distance from the throttle plate to the valve obturator thus in this embodiment is the distance to the spherically shaped surface.

According to a further preferred embodiment of the invented valve, the throttling plate is in sealing contact with the valve seat and exerts an axial force against the valve seat, either directly or by means of a sealing spring washer between the valve seat and the throttling plate.

The sealing contact prevents or at least reduces leakage behind the seat. Applying an axial force from the throttling plate onto the seat represents a very simple way of maintaining the seat in proper position in the valve. Axial is to be understood as perpendicular to the circle defined by the seat.

According to the invention, the throttle plate is mounted to the valve housing by screws.

Exchange of the throttling plate thereby may be accomplished in a very simple way. Attaching the throttle valve with threads or screws also leads to a precise and reliable function with regards to maintaining the seat in position.

According to the invention, the throttle plate includes an outer annular ring and at least one flange section extending radially inwardly from the annular ring.

This is an advantageous design for performing the dual function of the throttle plate. This construction also facilitates to manufacture throttle plates with different openings while maintaining the annular ring the same.

According to the invention, the valve obturator has a spherically shaped portion and the distance between the throttling plate and the valve obturator is at least 5 %, preferably at least 10% of the radius of the spherical portion of the valve obturator.

The larger the distance is, the less is the risk for particles to get stuck. The specified minimum distance in most cases provides a sufficient protection against that, in particular the larger value.

According to a further preferred embodiment, the distance is in the range of 15-25 % of the radius.

According to the invention, the distance is in the range of 5-20 mm.

These ranges expressed in radius percentage or mm, respectively, balances the desire to have as large distance as possible for avoiding that particles get stuck, and on the other hand the need to keep the distance short enough to obtain the desired valve characteristic resulting from the cooperation between the opening angle of the valve obturator and the shape of the opening of the throttle plate. A distance in the range of 7-15 mm is preferred in this respect.

According to the second aspect of the invention, the object is achieved in that a valve set includes a valve according to the present invention, in particular to any of the preferred embodiments thereof, which valve set further includes one or more further throttling plate(s), each of which fits to said valve such that the first throttling plate may be replaced by any one of said one or more further throttling plate(s), and wherein each throttling plate has an opening that is different than the opening of every other throttling plate in the set.

The invented valve set offers easy access to the possibility to change the capacity/characteristic of the valve merely by selecting the proper one of the throttle plates. The valve set may be provided either with a first throttling plate already mounted therein, or alternatively also the first throttling plate is provided as an auxiliary component.

The further throttling plate(s) may be provided at delivery of the valve to a user or may alternatively be provided later upon request by the user. The term "valve set" thus includes also the case where a user of the valve is not in position of a further throttling plate, but where such further throttling plate is available from the supplier of the valve.

According to a preferred embodiment of the invented valve set, it includes a plurality of such further throttling plates.

The larger the number of throttling plates to select from, the larger the possibility to optimize the capacity and the characteristic of the valve will be. A number of throttling plates in the range of 3-12 will in most cases be sufficient.

According to a further preferred embodiment, the openings are different with respect to the size of the opening and/or with respect to the shape of the opening.

By the size of the opening is meant the through-flow area thereof, and the shape is to be understood as the profile of the opening through which the liquid flows. The size of the opening is the dominating aspect with regards to the capacity. The shape of the opening is the main factor for determining the characteristic of the valve. Varying these two factors among the different throttle plates thus adapts to the need to change with respect to the mentioned properties of the valve. The set of throttle plates may be such that only the size is varied, but in many cases it is desirable that the set includes throttle plates, where the openings also differ in shape.

The valve set may for example include throttle plates with four different sizes, and for each size three different characteristics, e.g. linear, logarithmic and rapid opening, which means a total of twelve throttle plates in the set.

According to the third aspect of the invention the object is achieved by a method for modifying a valve according to claim 13.

According to preferred embodiments of the invented method, it is applied to a valve according to the present invention, in particular to any of the preferred embodiment thereof.

According to a further preferred embodiment of the method, the opening of the second throttling plate is different from the opening of the first throttling plate with respect to the size of the opening and/or with respect to the shape of the opening.

The invented valve set and the invented method have advantages similar to those of the invented valve, in particular to the preferred embodiments of these, which advantages have been described above.

The above described preferred embodiments of the invention are set out in the dependent claims. It is to be understood that further preferred embodiments may be constituted by any possible combination of features of the described preferred embodiments and by any possible combination of features in these with features described in the description of examples below.

### BRIEF DESCRIPTION OF THE DRAWINGS

Fig. 1 is a side view of a valve according to an example of the present invention.
Fig. 2 is a section along line A-A of the valve of fig. 1,
Fig. 3 is a perspective view of a slightly modified throttle plate of the valve according to the invention, and
Fig. 4 is a schematic view of four different throttling plates in a valve set according to the present invention

### DESCRIPTION OF EXAMPLES

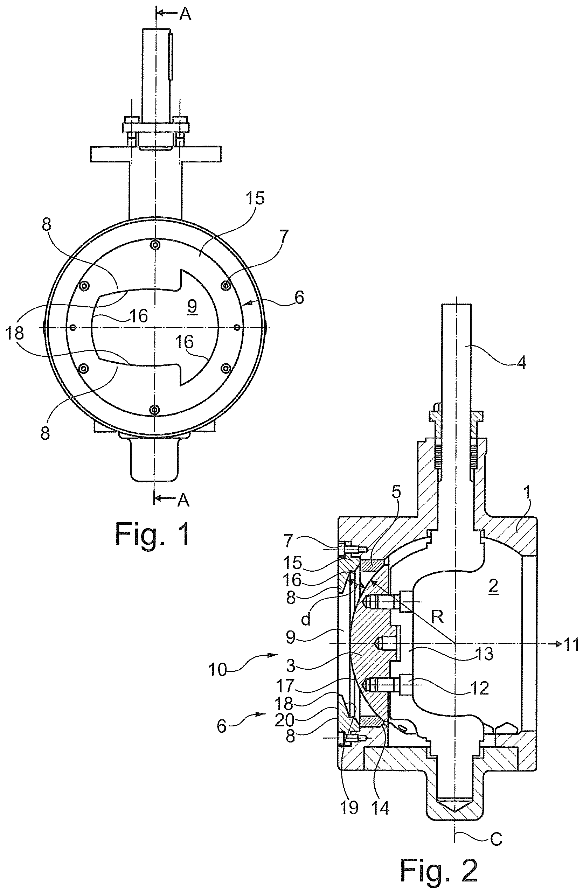

Figs. 1-2 depict a valve for liquid according to the present invention. The valve is of the ball type, more precisely a ball segment valve, and has a spherical segment as the valve obturator 3. The valve obturator 3 is of a non-floating kind and located in a valve chamber 2 of spherical shape formed by a valve housing 1. The valve chamber 2 communicates with an inlet 10 and an outlet 11 for the liquid. At the inlet there is located a valve seat 5 cooperating with the spherical segment forming the obturator 3. The seat 5 is an annular ring, and the end thereof facing the valve obturator 3 is shaped to closely fit the spherical surface 17 of the valve obturator 3.

In the figures the valve is in the closed position where the valve obturator 3 closes communication between the inlet 10 and the valve chamber 2. The valve obturator 3 is by bolts 12 attached to the crank 13 of a crank shaft 4. Opening of the valve is actuated by turning the crank shaft 4.

At the inlet a plate 6, in the application called throttle plate 6 is mounted. The throttle plate 6 has the dual function of throttling the liquid and to act as a cover plate for retaining the valve seat 5 in the position. The throttle plate 6 has an outer annular portion 15 which is mounted by screws 7 to the valve housing 1. When attaching the throttle plate 6, the annular portion 15 will abut the end of the seat 5 facing away from the valve chamber and thereby press the seat 5 against an abutment rim 14 that is a part of the valve housing 1 on its inside. Preferably there is a sealing spring washer (not shown) in between the throttle plate 6 and valve seat 5 to provide inherent adjustability, e.g. due to wear and/or thermal movements. As is evident for the skilled person such elastic adaptability may also be integrated into the annular portion 15, e.g. by an intermediate rubber ring. The seat 5 is thus by the rim 14 held in a well-defined position relative to the valve body and securely maintained so by the annular portion 15 of the throttle plate 6. The direct or indirect contact between the annular portion 15 of the throttle plate 6 and the seat 5 provides a sealing liquid from leakage outside the seat 5.

On the radially inner side of the annular portion 15 extend two oppositely positioned flange sections 8 which are integrated parts of the throttling plate 6. These flanges 8 occupy parts of the circular area defined by the inner edge 16 of the annular portion 15 and leave the remaining part as an opening 9 for the liquid through-flow. This opening 9 is in the illustrated example, as best seen in fig. 1, formed by portions of the inner edge 16 of the annular ring 15 and by the profiles 18 of the flange sections 8.

The size of the opening 9 determines the capacity of the valve. The shape of the opening determines the characteristic of the valve.

There is a distance d between the inner surface 19 of the throttling plate 6 and the outer surface 17 of the valve obturator 3, which distance d in the illustrated example corresponds to about 20 % of the radius R of the spherical surface 17. Preferably the inner surface 19 of the throttling plate 6 extends in a plane having a normal that is substantially parallel (+- 10°) with the normal of the outer surface 16 of the valve obturator 3. The distance d is sufficient large, preferably at least 5% of R, to prevent particles, fibres etc. to be jammed between the throttling flange sections 8 and the valve obturator 3. The distance d is sufficiently small, preferably at most 30% of R, to provide cooperation between the opening angle of the valve obturator 3 and the shape of the opening 9 of the throttle plate 6 for attaining the required valve characteristic.

The opening 9 in this example throttles the flow due to the flange sections 8 such that the capacity is reduced in comparison with the maximum nominal capacity of the valve. It is thus supposed that the valve is used for a process where this capacity is appropriate. Should there later be a production increase requiring a higher capacity, the throttle plate 6 is dismounted and replaced with another one having a larger opening 9, e.g. a throttling plate with smaller or without flange sections 8 such that the liquid passes less throttled or without being throttled through the throttle plate corresponding to the nominal capacity of the valve. The nominal capacity may for example relate to DN 150, whereas the capacity with the throttle plate in the figures corresponds to capacity for DN 125.

The shape of the opening in the illustrated example in figs, 1 and 2 is such that the characteristic is substantially linear having two equally sized flange sections, symmetrically positioned in relation to a center plane having the axis of rotation C as a normal, and wherein the flange section 8 protrude increasingly inward from the inner edge from a side section to a midsection.

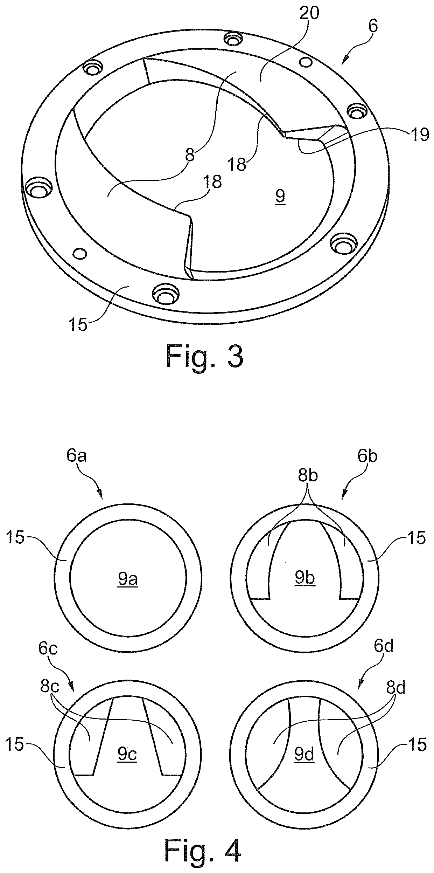

In Fig 3 there is shown a shape of the flanges 8 that are substantially the same seen in a front view (as Fig. 1), but also slightly different compared to figs. 1 and 2, by having spherically protruding outer surfaces 20 (compared to a plane surface 20 as in figs. 1, 2) such that the characteristic is more or less exactly linear.

Should it be found that another kind of characteristic would be more suitable for the process, the throttle plate 6 is exchanged with another throttle plate having another shape of the opening 9 achieved by another shape of the flange sections 8.

Fig 4 schematically illustrates a set of throttle plates having different openings 9a, 9b, 9c, 9d, with regards to size and/or shape. The annular portion 15 of the throttle plates are the same for all of them, such that the throttle plates can replace each other in one and the same valve. By providing a valve set that includes a valve and a plurality of different throttle plates, the valve can be adapted to various changing demands. It should be underlined that the throttle plates depicted in fig. 4 are merely for illustrating the principle of the concept, and the illustrated profile shapes thus do not represent true shapes for attaining the characteristics.

The invention is not limited by the scope presented by the examples described above, but by the scope of the appended claims, since as is evident for the skilled person many non-inventive variations of details may be performed and still obtain the basic functional advantages of the invention. For example, it is evident that varying spring arrangements may be used in place of a spring washer, to achieve a similar advantage as that provided by a spring washer.

## Claims

1. A valve of the ball-valve type for liquid with a valve housing (1) defining a valve chamber (2) connecting an inlet (10) to an outlet (11) and with a valve obturator (3) movably located in the valve chamber (2) at the inlet end of the valve chamber, which valve includes a valve seat (5) cooperating with the valve obturator (3) and further includes a first throttling plate (6), which throttling plate (6) has an opening (9) there through, which opening (9) determines the flow capacity and the flow characteristic of the valve, which valve obturator (3) includes a spherically shaped outer surface (17) cooperating with said seat (5) and is rotatable around an axis (C) through the centre defined by radius (R) of the spherical surface (17) of the valve obturator (3), the throttling plate (6) is a component that retains the valve seat (5) in the valve, where the throttling plate (6) has the dual function of throttling the liquid and to act as cover plate for retaining the valve seat (5) in position, **characterized in that** the throttling plate (6) includes an outer annular ring (15) retaining the valve seat (5) by means of the annular ring (15) being mounted by screws (7) to the valve housing (1) and that the throttling plate (6) includes at least one flange section (8) extending radially inwardly from the annular ring (15), which flange section (8) is located-at a distance (d) from the outer spherical surface (17) of the valve obturator (3), wherein said distance (d) is at least 5 % of the radius (R) of said spherically shaped surface and in the range of 5 - 20 mm.

2. A valve according to claim 1, wherein said distance (d) is at least 10 % of the radius (R) of said spherically shaped surface.

3. A valve according to claim 1 or 2, wherein the throttling plate (6) is arranged to exert an axial force against the valve seat (5), preferably by means of an intermediate spring washer.

4. A valve according to any one of claims 1-3, wherein the throttle plate (6) is releasable mounted to the valve housing (1), preferably by screws (7).

5. A valve according to claim 4, wherein the inner surface (19) of said at least one flange section (8) extends substantially in parallel with a tangent of an opposing part of the spherical surface (17) of the valve obturator (3).

6. A valve according to claim 4 or 5, wherein the outer surface (20) of said at least one flange section (8) protrudes outside of the outer surface of the annular ring (15).

7. A valve according to any one of claims 1-6, wherein the valve obturator (3) is by bolts (12) attached to a crank (13) of a crank shaft (4).

8. A valve according to claim 1, wherein said distance (d) is in the range of 15-25 % of said radius.

9. A valve according to any one of claims 1-8, wherein said distance (d) is in the range of 7-15 mm.

10. A valve set including a valve according to any one of claims 1-9, and which valve set includes one or more further throttling plate(s) (6a, 6b. 6c, 6d), each of which fits to said valve such that the first throttling plate (6) may be replaced by any one of said one or more further throttling plate(s) (6a, 6b, 6c, 6d), and wherein each throttling plate (6, 6a, 6b, 6c, 6d) has an opening (9, 9a, 9b, 9c, 9d) that is different than the opening of every other throttling plate in the set.

11. A valve set according to claim 10, wherein the valve set includes a plurality of such further throttling plates (6a, 6b, 6c, 6d).

12. A valve set according to claim 10 or 11, wherein the openings (9) are different with respect to the size of the opening and/or with respect to the shape of the opening (9).

13. A method for modifying a valve of the ball-valve type for liquid having a valve housing (1) defining a valve chamber (2) connecting an inlet (10) to an outlet (11) and with a valve obturator (3) located in the valve chamber (2), which valve includes a valve seat (5) cooperating with the valve obturator (3) and further includes a first throttling plate (6), which throttling plate (6) has an opening (9) there through, which opening (9) determines the flow capacity and the flow characteristic of the valve, and which throttling plate (6) is a component that by means of an outer annular ring (15) abuts the end of the valve seat (5) facing away from the valve chamber (2) the annular ring (15) being mounted by screws (7) to the valve housing (1) thereby pressing the seat (5) against an abutment rim (14) that is a part of the valve housing (1) on its inside retaining the valve seat (5) in position in the valve and which throttling plate (6) includes at least one flange section (8) extending radially inwardly from the annular ring (15), which flange section (8) is located at a distance (d) from an outer spherical surface (17) of the valve obturator (3), wherein said distance (d) is at least 5 % of the radius (R) of said spherically shaped surface and in the range of 5 - 20 mm, wherein the valve obturator (3) includes a spherically shaped outer surface (17) cooperating with said seat (5) and is rotatable around an axis (C) through the centre defined by radius (R) of the spherical surface (17) of the valve obturator (3), which method includes the steps of,
- removing said first throttling plate (6),
- providing a second throttling plate (6a, 6b, 6c, 6d) that fits to be mounted in the same place as the first throttling plate (6), and which has an opening (9a, 9b, 9c, 9d) that is different from the opening (9) of the first throttling plate (6), and
- mounting said second throttling plate (6a, 6b, 6c, 6d) in the place of the first throttling plate (6) and thereby also exerting a sealing axial force against the valve seat (5) either directly or by means of a sealing spring washer between the valve seat and the throttling plate.

14. A method according to claim 13, wherein the valve is of a kind according to any one of claims 1-10, and preferably wherein the opening of the second throttling plate is different from the opening of the first throttling plate with respect to the size of the opening (9) and/or with respect to the shape of the opening.

## Patentansprüche

1. Ein Ventil vom Typ Kugelventil für Flüssigkeit mit einem Ventilgehäuse (1), das eine Ventilkammer (2) definiert, die einen Einlass (10) mit einem Auslass (11) verbindet, und mit einem Ventilverschluss (3), der sich beweglich in der Ventilkammer (2) an dem Einlassende der Ventilkammer befindet, wobei das Ventil einen Ventilsitz (5) einschließt, der mit dem Ventilverschluss (3) zusammenwirkt, und ferner eine erste Drosselplatte (6) einschließt, wobei die Drosselplatte (6) eine Öffnung (9) durch sie hindurch aufweist, wobei die Öffnung (9) die Durchflusskapazität und die Durchflusscharakteristik des Ventils bestimmt, wobei der Ventilverschluss (3) eine kugelförmige geformte äußere Oberfläche (17) einschließt, die mit dem Sitz (5) zusammenwirkt und um eine Achse (C) durch den Mittelpunkt drehbar ist, definiert durch den Radius (R) der kugelförmigen Oberfläche (17) des Ventilverschlusses (3), wobei die Drosselplatte (6) eine Komponente ist, die den Ventilsitz (5) in dem Ventil hält, wobei die Drosselplatte (6) die Doppelfunktion hat, die Flüssigkeit zu drosseln und als Abdeckplatte zu agieren, um den Ventilsitz (5) in Position zu halten, **gekennzeichnet dadurch, dass** die Drosselplatte (6) einen kreisförmigen äußeren Ring (15) aufweist, der den Ventilsitz (5) mithilfe des kreisförmigen Ringes (15) hält, der durch Schrauben (7) an dem Ventilgehäuse (1) befestigt ist, und dass die Drosselplatte (6) wenigstens einen Flanschabschnitt (8) einschließt, der sich radial nach innen von dem kreisförmigen Ring (15) erstreckt, wobei sich der Flanschabschnitt (8) in einem Abstand (d) von der äußeren kugelförmigen Oberfläche (17) des Ventilverschlusses (3) befindet, wobei der Abstand (d) wenigstens 5 % des Radius (R) der kugelförmig geformten Oberfläche beträgt und in dem Bereich von 5 - 20 mm ist.

2. Ventil nach Anspruch 1, wobei der Abstand (d) wenigstens 10 % des Radius (R) der kugelförmig geformten Oberfläche beträgt.

3. Ventil nach Anspruch 1 oder 2, wobei die Drosselplatte (6) angeordnet ist, eine Axialkraft gegen den Ventilsitz (5) auszuüben, bevorzugt mittels einer Zwischenfederscheibe.

4. Ventil nach einem der Ansprüche 1 - 3, wobei die Drosselplatte (6) lösbar am Ventilgehäuse (1) befestigt ist, bevorzugt durch Schrauben (7).

5. Ventil nach Anspruch 4, wobei sich die innere Oberfläche (19) des wenigstens einen Flanschabschnitts (8) im Wesentlichen parallel zu einer Tangente eines gegenüberliegenden Teils der kugelförmigen Oberfläche (17) des Ventilverschlusses (3) erstreckt.

6. Ventil nach Anspruch 4 oder 5, wobei die äußere Oberfläche (20) des wenigstens einen Flanschabschnitts (8) außerhalb der äußeren Oberfläche des kreisförmigen Ringes (15) vorsteht.

7. Ventil nach einem der Ansprüche 1 - 6, wobei der Ventilverschluss (3) durch Bolzen (12) an einer Kröpfung (13) einer Kurbelwelle (4) befestigt ist.

8. Ventil nach Anspruch 1, wobei der Abstand (d) in dem Bereich von 15 - 25 % des Radius liegt.

9. Ventil nach einem der Ansprüche 1 - 8, wobei der Abstand (d) im Bereich von 7 - 15 mm liegt.

10. Ventilsatz einschließend ein Ventil nach einem der Ansprüche 1 - 9, und wobei der Ventilsatz eine oder mehr weitere Drosselplatten (6a, 6b, 6c, 6d) einschließt, von denen jede zu dem Ventil passt, so dass die erste Drosselplatte (6) durch eine der einen oder mehr weiteren Drosselplatten (6a, 6b, 6c, 6d) ersetzt werden kann, und wobei jede Drosselplatte (6, 6a, 6b, 6c, 6d) eine Öffnung (9, 9a, 9b, 9c, 9d) aufweist, die sich von der Öffnung jeder anderen Drosselplatte in dem Satz unterscheidet.

11. Ventilsatz nach Anspruch 10, wobei der Ventilsatz eine Vielzahl solcher weiterer Drosselplatten (6a, 6b, 6c, 6d) einschließt.

12. Ventilsatz nach Anspruch 10 oder 11, wobei die Öffnungen (9) in Bezug auf die Größe der Öffnung und / oder in Bezug auf die Form der Öffnung (9) unterschiedlich sind.

13. Verfahren zum Modifizieren eines Ventils vom Typ Kugelventil für Flüssigkeit, das ein Ventilgehäuse (1) aufweist, das eine Ventilkammer (2) definiert, die einen Einlass (10) mit einem Auslass (11) verbindet, und mit einem Ventilverschluss (3), der sich in der Ventilkammer (2) befindet, wobei das Ventil einen Ventilsitz (5) einschließt, der mit dem Ventilverschluss (3) zusammenwirkt, und ferner eine erste Drosselplatte (6) einschließt, wobei die Drosselplatte (6) eine Öffnung (9) durch sie hindurch aufweist, wobei die Öffnung (9) die Durchflusskapazität und die Durchflusscharakteristik des Ventils bestimmt, und wobei die Drosselplatte (6) eine Komponente ist, die mittels eines äußeren kreisförmigen Ringes (15) an das Ende des Ventilsitzes (5) angrenzt, abgewandt von der Ventilkammer (2), wobei der kreisförmige Ring (15) durch Schrauben (7) an dem Ventilgehäuse (1) befestigt wird, wodurch der Sitz (5) gegen einen Anlagebereich (14) gedrückt wird, der ein Teil von dem Ventilgehäuse (1) an seiner Innenseite ist, den Ventilsitz (5) in Position in dem Ventil hält, und wobei die Drosselplatte (6) wenigstens einen Flanschabschnitt (8) einschließt, der sich radial nach innen von dem kreisförmigen Ring (15) erstreckt, wobei sich der Flanschabschnitt (8) in einem Abstand (d) von einer äußeren kugelförmigen Oberfläche (17) des Ventilverschlusses (3) befindet, wobei der Abstand (d) wenigstens 5 % des Radius (R) der kugelförmig geformten Oberfläche beträgt und in dem Bereich von 5 - 20 mm ist, wobei der Ventilverschluss (3) eine kugelförmig geformte äußere Oberfläche (17) einschließt, die mit dem Sitz (5) zusammenwirkt und um eine Achse (C) durch den Mittelpunkt drehbar ist, definiert durch den Radius (R) der kugelförmigen Oberfläche (17) des Ventilverschlusses (3), wobei das Verfahren die Schritte einschließt des
- Entfernens der ersten Drosselplatte (6),
- Bereitstellens einer zweiten Drosselplatte (6a, 6b, 6c, 6d), die passend befestigt ist an derselben Stelle wie die erste Drosselplatte (6), und die eine Öffnung (9a, 9b, 9c, 9d) aufweist, die sich von der Öffnung (9) der ersten Drosselplatte (6) unterscheidet, und
- Befestigens der zweiten Drosselplatte (6a, 6b, 6c, 6d) an der Stelle der ersten Drosselplatte (6) und dadurch auch Ausübens einer Abdichtungsaxialkraft gegen den Ventilsitz (5) entweder direkt oder mittels einer Dichtungsfederscheibe zwischen dem Ventilsitz und der Drosselplatte.

14. Verfahren nach Anspruch 13, wobei das Ventil von einer Art nach einem der Ansprüche 1 - 10 ist, und bevorzugt wobei sich die Öffnung der zweiten Drosselplatte von der Öffnung der ersten Drosselplatte in Bezug auf die Größe der Öffnung (9) und / oder in Bezug auf die Form der Öffnung unterscheidet.

## Revendications

1. Une vanne du type à obturateur sphérique pour liquide avec un boîtier de vanne (1) définissant une chambre de vanne (2) reliant une entrée (10) à une sortie (11) et avec un obturateur de vanne (3) situé de manière mobile dans la chambre de vanne (2) au niveau de l'extrémité d'entrée de la chambre de vanne, laquelle vanne comprend un siège de vanne (5) coopérant avec l'obturateur de vanne (3) et comprend en outre une première plaque d'étranglement (6), laquelle plaque d'étranglement (6) présente une ouverture (9) à travers elle, laquelle ouverture (9) détermine la capacité d'écoulement et la caractéristique d'écoulement de la vanne, lequel obturateur de vanne (3) comprend une surface extérieure de forme sphérique (17) coopérant avec ledit siège (5) et est apte à tourner autour d'un axe (C) passant par le centre défini par le rayon (R) de la surface sphérique (17) de l'obturateur de vanne (3) ; la plaque d'étranglement (6) est un composant qui retient le siège de vanne (5) dans la vanne, la plaque d'étranglement (6) ayant la double fonction d'étrangler le liquide et de servir de plaque de couverture pour maintenir le siège de vanne (5) en position, **caractérisé en ce que** la plaque d'étranglement (6) comprend un anneau annulaire extérieur (15) retenant le siège de vanne (5) par le fait que l'anneau annulaire (15) est monté par des vis (7) sur le boîtier de vanne (1) et **en ce que** la plaque d'étranglement (6) comprend au moins une portion formant bride (8) s'étendant radialement vers l'intérieur à partir de l'anneau annulaire (15), laquelle portion formant bride (8) est située à une distance (d) de la surface sphérique extérieure (17) de l'obturateur de la vanne (3), ladite distance (d) étant au moins égale à 5 % du rayon (R) de ladite surface de forme sphérique et dans la gamme allant de 5 à 20 mm.

2. Une vanne selon la revendication 1, dans laquelle ladite distance (d) est au moins égale à 10 % du rayon (R) de ladite surface de forme sphérique.

3. Une vanne selon la revendication 1 ou la revendication 2, dans laquelle la plaque d'étranglement (6) est agencée de façon à exercer une force axiale contre le siège de vanne (5), de préférence au moyen d'une rondelle élastique intermédiaire.

4. Une vanne selon l'une quelconque des revendications 1 à 3, dans laquelle la plaque d'étranglement (6) est montée de manière amovible sur le boîtier de vanne (1), de préférence au moyen de vis (7).

5. Une vanne selon la revendication 4, dans laquelle la surface intérieure (19) de ladite au moins une portion formant bride (8) s'étend sensiblement parallèlement à une tangente d'une partie opposée de la surface sphérique (17) de l'obturateur de vanne (3).

6. Une vanne selon la revendication 4 ou la revendication 5, dans laquelle la surface extérieure (20) de ladite au moins une portion formant bride (8) fait saillie à l'extérieur de la surface extérieure de l'anneau annulaire (15).

7. Une vanne selon l'une quelconque des revendications 1 à 6, dans laquelle l'obturateur de vanne (3) est fixé par des boulons (12) à une manivelle (13) d'un arbre-manivelle (4).

8. Une vanne selon la revendication 1, dans laquelle ladite distance (d) est située dans la gamme allant de 15 à 25 % dudit rayon.

9. Une vanne selon l'une quelconque des revendications 1 à 8, dans laquelle ladite distance (d) est située dans la gamme allant de 7 à 15 mm.

10. Un ensemble formant vanne comprenant une vanne selon l'une quelconque des revendications 1 à 9, lequel ensemble de vanne comprend une ou plusieurs plaque(s) d'étranglement supplémentaire(s) (6a, 6b, 6c, 6d), dont chacune s'adapte à ladite vanne de sorte que la première plaque d'étranglement (6) soit apte à être remplacée par l'une quelconque desdites une ou plusieurs plaque(s) d'étranglement supplémentaire(s) (6a, 6b, 6c, 6d), chaque plaque d'étranglement (6, 6a, 6b, 6c, 6d) ayant une ouverture (9, 9a, 9b, 9c, 9d) qui est différente de l'ouverture de chaque autre plaque d'étranglement de l'ensemble.

11. Un ensemble formant vanne selon la revendication 10, dans lequel l'ensemble formant vanne comprend une pluralité de telles plaques d'étranglement supplémentaires (6a, 6b, 6c, 6d).

12. Un ensemble formant vanne selon la revendication 10 ou la revendication 11, dans lequel les ouvertures (9) sont différentes en ce qui concerne la taille de l'ouverture et/ou la forme de l'ouverture (9).

13. Un procédé de modification d'une vanne du type à obturateur sphérique pour liquide ayant un corps de vanne (1) définissant une chambre de vanne (2) reliant une entrée (10) à une sortie (11) et avec un obturateur de vanne (3) situé dans la chambre de vanne (2), laquelle vanne comprend un siège de vanne (5) coopérant avec l'obturateur de vanne (3) et comprend en outre une première plaque d'étranglement (6), laquelle plaque d'étranglement (6) présente une ouverture (9) à travers elle, laquelle ouverture (9) détermine la capacité d'écoulement et la caractéristique d'écoulement de la vanne, et laquelle plaque d'étranglement (6) est un composant qui, au moyen d'une anneau annulaire extérieur (15), vient en butée contre l'extrémité du siège de vanne (5) opposée à la chambre de vanne (2), l'anneau annulaire (15) étant montée par des vis (7) sur le boîtier de vanne (1), pressant ainsi le siège (5) contre un rebord de butée (14) qui fait partie du boîtier de la vanne (1) sur son côté intérieur, retenant le siège de la vanne (5) en position dans la vanne, et laquelle plaque d'étranglement (6) comprend au moins une portion formant bride (8) s'étendant radialement vers l'intérieur à partir de l'anneau annulaire (15), laquelle portion formant bride (8) est située à une distance (d) d'une surface sphérique extérieure (17) de l'obturateur de vanne (3), ladite distance (d) étant au moins égale à 5 % du rayon (R) de ladite surface de forme sphérique et dans la gamme allant de 5 à 20 mm, l'obturateur de vanne (3) comprenant une surface extérieure de forme sphérique (17) coopérant avec ledit siège (5) et étant apte à tourner autour d'un axe (C) passant par le centre défini par le rayon (R) de la surface sphérique (17) de l'obturateur de vanne (3), lequel procédé comprend les étapes suivantes :
- le fait de retirer ladite première plaque d'étranglement (6),
- le fait de prévoir une deuxième plaque d'étranglement (6a, 6b, 6c, 6d) qui est adaptée à être montée au même endroit que la première plaque d'étranglement (6) et qui présente une ouverture (9a, 9b, 9c, 9d) différente de l'ouverture (9) de la première plaque d'étranglement (6), et
- le fait de monter ladite deuxième plaque d'étranglement (6a, 6b, 6c, 6d) à la place de la première plaque d'étranglement (6) et exercer ainsi également une force axiale d'étanchéité contre le siège de vanne (5), soit directement, soit au moyen d'une rondelle élastique d'étanchéité placée entre le siège de vanne et la plaque d'étranglement.

14. Un procédé selon la revendication 13, dans lequel la vanne est d'un type selon l'une quelconque des revendications 1 à 10, et dans lequel, de préférence, l'ouverture de la deuxième plaque d'étranglement est différente de l'ouverture de la première plaque d'étranglement en ce qui concerne la taille de l'ouverture (9) et/ou en ce qui concerne la forme de l'ouverture.
